# EUROPEAN PATENT SPECIFICATION

(11) **EP 4 593 188 B1**
(45) Date of publication and mention of the grant of the patent: **21.10.2026**
(21) Application number: 23903830.0
(22) Date of filing: 29.11.2023
(51) Int. Cl.: H01M 50/503, H01M 50/507, H01M 10/04, H01M 50/211, H01M 50/50

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 16.12.2022 KR 20220177291
(43) Date of publication of application: 30.07.2025
(73) Proprietor: LG Energy Solution, Ltd., Seoul 07335 (KR)
(72) Inventor: CHOI, Jinyoung, Daejeon 34122 (KR); YUN, Hyeonki, Daejeon 34122 (KR); RYU, Jaeuk, Daejeon 34122 (KR); JU, Eunah, Daejeon 34122 (KR); HWANG, Taewon, Daejeon 34122 (KR)
(74) Representative: Plasseraud IP
(86) International application number: PCT/KR2023/019423
(87) International publication number: WO 2024/128627

(56) References cited:
- CN-A- 110 073 520
- KR-A- 20180 053 418
- KR-A- 20180 053 418
- KR-A- 20180 067 198
- KR-A- 20190 054 709
- KR-A- 20190 054 709
- KR-B1- 101 953 362
- KR-B1- 102 328 730
- KR-B1- 102 328 730

## Description

### [Technical Field]

### CROSS-REFERENCE TO RELATED APPLICATION

This application claims priority to and the benefit of Korean Patent Application No. 10-2022-0177291 filed in the Korean Intellectual Property Office on December 16, 2022.

The present disclosure relates to a battery module and a battery pack including the same, and more particularly, to a battery module having improved battery energy density by its improved assembly and reduced assembly tolerance, and a battery pack including the same.

### [Background Art]

There have been a rapidly growing demand for a secondary battery as an energy source in accordance with increasing technology development and demand for a mobile device. Accordingly, many studies have been conducted on the secondary battery which may meet various needs.

The secondary battery is spotlighted as the energy source for a power device such as an electric bicycle, an electric vehicle, or a hybrid electric vehicle, as well as the mobile device such as a mobile phone, a digital camera or a laptop computer.

In recent years, there has been an increasing need for a high-capacity secondary battery structure as well as usage of the secondary battery as an energy storage source. As a result, there is a growing demand for a battery pack having a medium to large module structure for aggregating battery modules each including a plurality of secondary batteries connected in series/parallel with each other.

A plurality of battery cells may be connected in series/parallel with each other to form the battery pack. In this case, a general method may be used to configure the battery module including at least one battery cell and then configure the battery pack by adding another component by using at least one battery module. In detail, the plurality of battery cells may be stacked to form a battery cell stack, and a bus bar structure may be mounted on one surface and the other surface of the battery cell stack to be electrically connected to the battery cells.

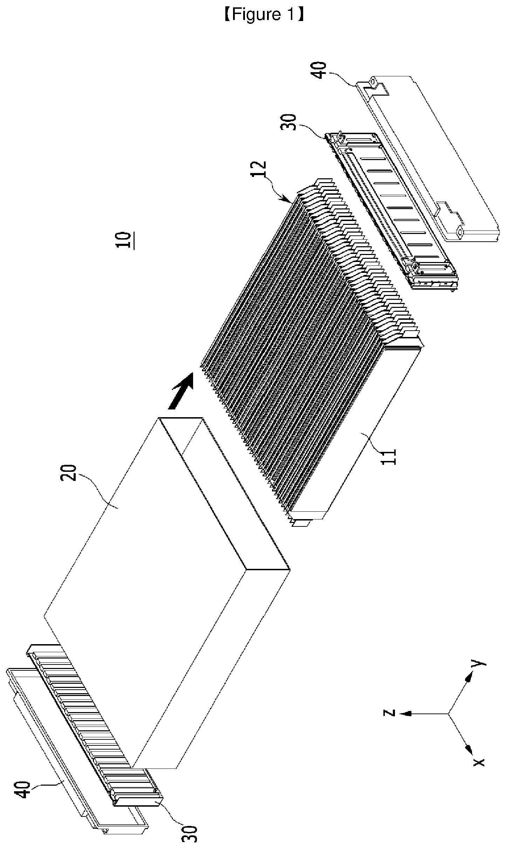

FIG. 1 is an exploded perspective view of a conventional battery module.

Referring to FIG. 1, a conventional battery module 10 may include a battery cell stack 12 in which a plurality of battery cells 11 are stacked, a module frame 20 accommodating the battery cell stack 12,a bus bar structure 30 disposed on the front surface and/or rear surface of the battery cell stack 12, and an end plate 40 covering the front surface and/or rear surface of the battery cell stack 12.

Among these components, the bus bar structure 30 may include one bus bar frame and at least one bus bar, and the bus bar may be electrically connected to an electrode lead protruding from the battery cell 11.

In this case, when the bus bar structure 30 is mounted on the battery cell stack 12 in a state where the battery cells 11 stacked without any mechanical reference, a length of the electrode lead passing through a slit may differ from its intended length during welding, thus causing a welding defect between the electrode lead and the bus bar. In addition, the battery cell 11 may be unevenly pressed by the bus bar frame, which may lower battery safety and reduce battery space utilization.

Document CN 110 073 520 A discloses a battery module according to the preamble portion of claim 1. Other battery modules are disclosed in KR 102 328 730 B1, KR 2018 0053418 A and KR 2019 0054709 A.

### [Disclosure]

### [Technical Problem]

The present disclosure attempts to provide a battery module having improved energy density, improved battery safety, and improved battery space utilization.

However, problems to be solved by embodiments of the present disclosure are not limited to the above-mentioned problems and may be variously expanded in a range of the spirit of the present disclosure included in the embodiments.

### [Technical Solution]

According to an embodiment, a battery module includes: a battery cell stack in which a plurality of battery cells are stacked; a module frame storing the battery cell stack; and a bus bar structure including a plurality of bus bars each electrically connected to the battery cells, and a bus bar frame on which the bus bar is disposed, wherein the bus bar frame includes the plurality of separate bus bar frames, and the separate bus bar frames are coupled to each other by a position guide member.

The position guide member may include a guide hole disposed in the separate bus bar frame, and a guide pin disposed to pass through in the plurality of guide holes.

The guide pin may be a pin extending in a stacking direction of the battery cell stack.

The guide hole may be a hole disposed in each of two ends of the bus bar frame in a height direction.

The guide pin may have higher rigidity than the bus bar frame.

The bus bar frame includes a battery cell insertion part in which an electrode lead protruding from the front or rear surface of the battery cell and a cell terrace, which is a pouch case surrounding a portion of the electrode lead, are inserted and mounted, and a slit connected to the battery cell insertion part and allowing the electrode lead to pass through the outside of the bus bar frame.

One surface of the electrode lead protruding outside the bus bar frame may be an assembly reference surface, and a width and height of all the assembly reference surfaces may be constant in the plurality of battery cells.

The battery module further includes a press plate disposed in the bus bar frame.

The press plate may be in contact with one surface or the other surface of the electrode lead disposed in the bus bar frame, or in contact with the one surface and the other surface of the electrode lead disposed in the bus bar frame.

The press plate is disposed in a press area which is an area included in the battery cell insertion part, and the press area includes a plate coupling part passing through the bus bar frame in a direction perpendicular to the battery cell insertion part and the slit on a plane.

A coupling member may be inserted into the plate coupling part to fix the bus bar and the press plate to each other.

The bus bar may be disposed in a bus bar mounting part which is a groove recessed into the bus bar frame.

The bus bar mounting part may be the groove recessed into each of two surfaces of the bus bar frame, and include a first bus bar mounting part disposed in one surface of the bus bar frame, and a second the bus bar mounting part disposed in the other surface of the bus bar frame.

The first bus bar mounting part and the second the bus bar mounting part may have their sizes corresponding to each other.

Each of the first bus bar mounting part and the second the bus bar mounting part may have the same size as half a size of the bus bar or larger than half the size of the bus bar.

The first bus bar mounting part and the second the bus bar mounting part of the bus bar frames adjacent to each other may form one bus bar mounting part.

The bus bar may include a bus bar coupling part which is a hole disposed in each of two ends of the bus bar in a height direction.

A coupling member may be inserted into the bus bar coupling part to fixedly couple the bus bar to the bus bar mounting part.

According to another embodiment, a battery pack includes the battery module described above.

### [Advantageous Effects]

According to the embodiments, the assembly tolerance between the battery cell stack and the bus bar structure may be reduced to thus improve the battery energy density, and also improve the battery safety simultaneously because the bus bar structure does not press the battery cell stack unevenly.

In addition, the welding defect rate between the electrode lead and bus bar of the battery cell may be reduced to thus improve the battery efficiency.

The effects of the present disclosure are not limited to the above-mentioned effects, and other effects that are not mentioned may be obviously understood by those skilled in the art from the claims.

### [Description of the Drawings]

FIG. 1 is an exploded perspective view of a conventional battery module.
FIG. 2 is an exploded perspective view of a battery module according to an embodiment of the present disclosure.
FIG. 3 is an exploded perspective view showing that a battery cell of the present disclosure is mounted on a bus bar structure.
FIG. 4 is a transparent perspective view showing that the battery cell of FIG. 3 is mounted on the bus bar structure.
FIG. 5 is a transparent perspective view of the battery cell and bus bar structure of FIG. 4 viewed from an x-axis direction.
FIG. 6 is a perspective view showing that the bus bar structure of the present disclosure is coupled to a guide pin.
FIG. 7 is a perspective view showing that the battery cell and bus bar structure of FIG. 6 are stacked.
FIG. 8 is a view showing that the bus bar of the present disclosure is mounted on a bus bar frame.
FIG. 9 is a view showing that the bus bar of FIG. 8 is mounted on the bus bar frame.

### [Mode for Invention]

Hereinafter, embodiments of the present disclosure are described in detail with reference to the accompanying drawings for those skilled in the art to which the present disclosure pertains to easily practice the present disclosure. However, the present disclosure may be modified in various different forms, and is not limited to the embodiments provided in the specification.

A portion unrelated to the description is omitted in order to obviously describe the present disclosure, and the same or similar components are denoted by the same reference numeral throughout the specification.

In addition, the size and thickness of each component shown in the accompanying drawings are arbitrarily shown for convenience of explanation, and therefore, the present disclosure is not necessarily limited to contents shown in the drawings. The thicknesses are exaggerated in the drawings in order to clearly represent several layers and areas. In addition, the thicknesses of some layers and areas are exaggerated in the drawings for convenience of explanation.

In addition, when an element such as a layer, a film, an area or a plate is referred to as being "on" or "above" another element, the element may be "directly on" another element or may have a third element interposed therebetween. On the contrary, when an element is referred to as being "directly on" another element, there is no third element interposed therebetween. In addition, when an element is referred to as being "on" or "above" a reference element, the element may be disposed on or below the reference element, and may not necessarily be "on" or "above" the reference element in an opposite direction of gravity.

Throughout the specification, unless described to the contrary, "including" any component will be understood to imply the inclusion of other elements rather than the exclusion of other elements.

In addition, throughout the specification, an expression "on the plane" may indicate a case where a target is viewed from the top, and an expression "on the cross section" may indicate a case where a cross section of the target taken in a vertical direction is viewed from its side.

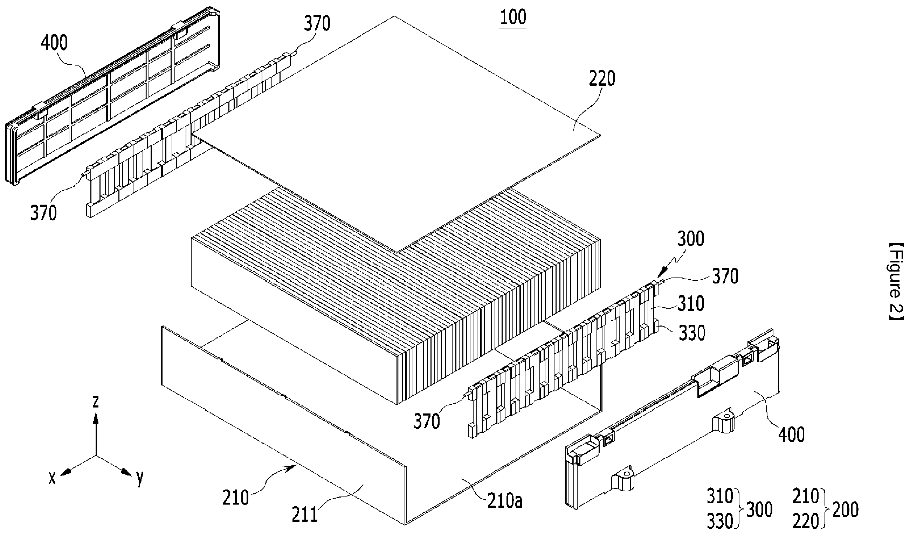

FIG. 2 is an exploded perspective view of a battery module according to an embodiment of the present disclosure.

Referring to FIG. 2, a battery module 100 according to an embodiment of the present disclosure may include a battery cell stack 120 in which a plurality of battery cells 110 are stacked, a module frame 200 storing the battery cell stack 120, a bus bar structure 300 disposed on the front surface and/or rear surface of the battery cell stack 120, and an end plate 400 disposed on the front surface and/or rear surface of the bus bar structure 300.

The battery cell 110 may be a pouch-type battery cell. The pouch-type battery cell may be formed by storing an electrode assembly in a pouch case of a laminate sheet including a resin layer and a metal layer, and then heat-sealing a sealing part of the pouch case. Here, the battery cell 110 may have a rectangular sheet-type structure.

The plurality of battery cells 110 may be provided, and the plurality of battery cells 110 may be stacked to be electrically connected to each other to thus form the battery cell stack 120. In detail, the plurality of battery cells 110 may be stacked in a direction parallel to an x-axis.

The module frame 200 storing the battery cell stack 120 may include a U-shaped frame 210 and a top cover 220.

The U-shaped frame 210 may include a bottom part 210a and two side parts 211 extending upward from both ends of the bottom part 210a. The bottom part 210a may cover a lower surface of the battery cell stack 120 (in a -z-axis direction), and the side parts 211 may cover both side surfaces of the battery cell stack 120 (in the x-axis direction and the -x-axis direction).

The top cover 220 may have a one plate-shaped structure for covering an upper surface of the battery cell stack 120 (in the z-axis direction) except for its lower surface and both side surfaces, surrounded by the U-shaped frame 210.

The top cover 220 and the U-shaped frame 210 may be coupled with each other by welding or the like while having their corresponding corners in contact with each other, thereby forming a structure for covering the top, bottom, left and right sides of the battery cell stack 120. The battery cell stack 120 may be physically protected by the top cover 220 and the U-shaped frame 210. To this end, the top cover 220 and the U-shaped frame 210 may each include a metal material having a certain strength.

Meanwhile, although not shown in detail, the module frame 200 according to a modified example may be a mono frame in the form of a metal plate in which its upper surface, lower surface, and both side surfaces are integrated with each other. That is, the U-shaped frame 210 and the top cover 220 may not be mutually coupled, and may be manufactured by extrusion molding to have the upper surface, lower surface, and both the side surfaces integrated with each other.

The bus bar structure 300 may be assembled to and disposed on the front surface and rear surface of the battery cell stack 120 (in a y-axis direction and a -y-axis direction), and may include a bus bar 310 and a bus bar frame 330. In more detail, the bus bar structure 300 may be provided to cover the front surface and rear surface of the battery cell stack 120 (in the y-axis direction and the -y-axis direction) and guide a connection between the battery cell stack 120 and an external device.

The bus bar 310 may be electrically connected to each electrode lead protruding from the battery cell 110. The bus bar 310 may electrically connect the battery cell stack 120 to a battery system.

The bus bar 310 may be mounted on the bus bar frame 330. The bus bar frame 330 may fix a position of the bus bar 310 and physically protect the battery cell stack 120 and the bus bar 310 from an external impact.

The bus bar frame 330 may include an electrically insulating material. For example, the bus bar frame 330 may be plastic. The bus bar frame 330 may limit contact of the bus bar 310 with another part of the battery cell 110 other than its part to which the electrode lead is joined, and may prevent an electrical short circuit from occurring therein.

The plurality of bus bar structures 300 may be provided. In detail, each bus bar structure 300 may be provided to correspond to at least one battery cell 110. That is, the bus bar structure 300 may include the plurality of bus bars 310 and the plurality of bus bar frames 330, each corresponding to the number of battery cells 110. The number of the bus bar structures 300 may be the same as the number of the battery cells 110 or may be smaller than the number of the battery cells 110.

The plurality of bus bars may be conventionally provided, and there is only one bus bar frame including the plurality of bus bars. That is, the plurality of bus bars may be disposed while being fixed to one bus bar frame, and the shape and position of the bus bar frame may also be fixed. In addition, it is difficult to accurately align the positions of the battery cells in a length direction because there is no mechanical reference when forming the battery cell stack by stacking the battery cells.

Therefore, when the conventional fixed bus bar structure is mounted on the battery cell stack having its position uneven in the length direction, the electrode lead passing through the bus bar frame may have a length different for each battery cell. Therefore, a welding defect between the electrode lead and the bus bar may occur, which may lower battery efficiency. In addition, the conventional battery cell stack may have a fixed structure for entirely covering the front surface and/or rear surface of the battery cell stack. Therefore, the battery cell stack may be unevenly pressed to thus increase a risk of battery cell damage, thereby lowering battery safety. In addition, assembly tolerance may occur between the battery cell stack and bus bar frame, thus reducing battery space utilization and energy density.

On the other hand, the bus bar structures 300 according to an embodiment of the present disclosure may respectively be disposed to correspond to the front surface and/or rear surface of each battery cell 110 or at least two of the battery cells 110. That is, the plurality of bus bar structures 300 may not be connected to each other and may be provided separately. Therefore, the assembly tolerance may not occur between the battery cell stack 120 and the bus bar structure 300, thus improving the battery space utilization and the energy density. In addition, the bus bar structure 300 may not apply an uneven pressure to the battery cell 110 to thus prevent a change in shape or damage to the pouch case, thereby improving the assembly, safety, and structural stability of the battery.

The end plate 400 may cover the battery cell stack 120 by being disposed on open first and second sides of the module frame 200 (in the y-axis direction and the -y-side direction). The end plate 400 may physically protect the battery cell stack 120 and other electronic component from the external impact.

Meanwhile, although not shown in detail, the bus bar frame mounted with the bus bar and an insulating cover for electrical insulation may be disposed between the battery cell stack 120 and the end plate 400.

Hereinafter, the description describes in more detail that the battery cell of the present disclosure is mounted on the bus bar structure.

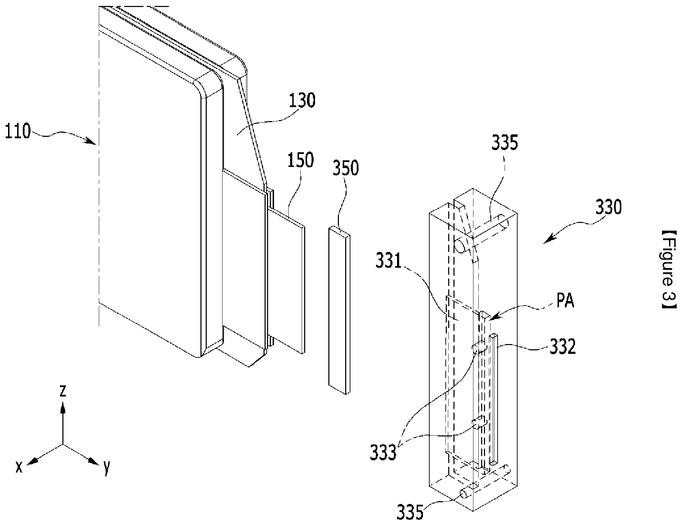

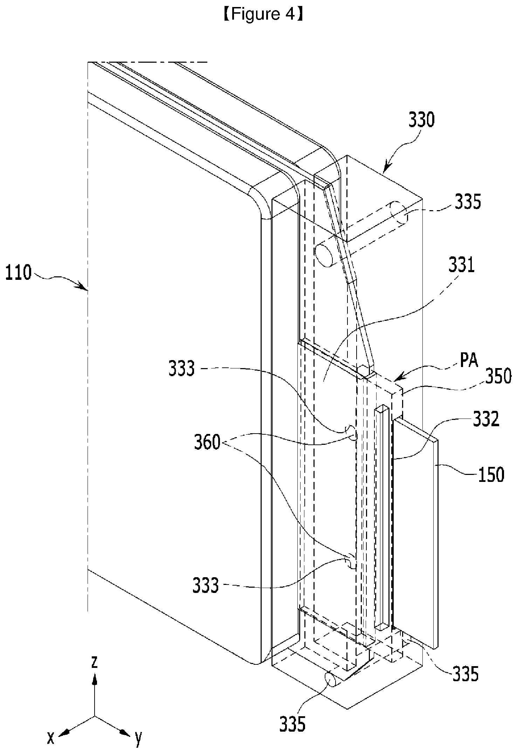

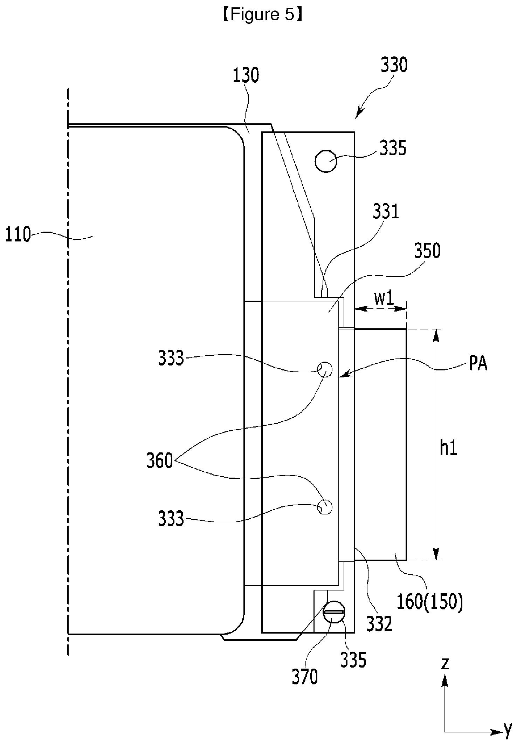

FIG. 3 is an exploded perspective view showing that the battery cell of the present disclosure is mounted on the bus bar structure. FIG. 4 is a transparent perspective view showing that the battery cell of FIG. 3 is mounted on the bus bar structure. FIG. 5 is a transparent perspective view of the battery cell and bus bar structure of FIG. 4 viewed from the x-axis direction.

Referring to FIGS. 3 and 4, the battery cell 110 of the present disclosure may be mounted on the bus bar frame 330. In detail, one battery cell 110 may be mounted on one bus bar frame 330.

The battery cell 110 may include electrode leads 150 protruding from the front surface and rear surface of the battery cell 110 (in the y-axis direction and the -y-axis direction), and the electrode lead 150 may be mounted in the bus bar frame 330 while passing through the bus bar frame 330.

The bus bar frame 330 may include a battery cell insertion part 331 in which the electrode lead 150 and a cell terrace 130, which is the pouch case surrounding a portion of the electrode lead 150, are inserted and mounted, and a slit 332 connected to the battery cell insertion part 331 to allow the electrode lead 150 to pass through the outside of the bus bar frame 330.

The battery cell insertion part 331 may be a hole disposed in one side of the bus bar frame 330 and connected to the slit 332. The battery cell insertion part 331 may be an area where the electrode lead 150 and the cell terrace 130 are inserted into the bus bar frame 330. The battery cell insertion part 331 may be the hole disposed in one side of the bus bar frame 330 that is close to the battery cell 110.

A shape of the battery cell insertion part 331 may correspond to a shape of the cell terrace 130. The cell terrace 130 may be one area extending from a main body of the pouch case and sealed to seal the electrode assembly. The electrode leads 150 may partially protrude from one side and the other side of the cell terrace 130, specifically the front and rear of the cell terrace 130 (in the y-axis direction and the -y-axis direction).

The slit 332 may be a hole disposed in the other side of the bus bar frame 330 and connected to the battery cell insertion part 331. The slit 332 may be the hole allowing the electrode lead 150 inserted into the battery cell insertion part 331 to pass through the outside of the bus bar frame 330. The slit 332 may be the hole disposed in the other side of the bus bar frame 330 that is far from the battery cell 110.

A shape of the slit 332 may correspond to a shape of the electrode lead 150. In this case, the slit 332 accommodating only the electrode lead 150 may have a smaller size than the battery cell insertion part 331 accommodating the cell terrace 130.

The bus bar frame 330 may include the battery cell insertion part 331 and the slit 332 respectively passing through one side and the other side of the bus bar frame 330. The cell terrace 130 and the electrode lead 150 may be inserted into the battery cell insertion part 331, and the electrode lead 150 may pass through the bus bar frame 330 through the slit 332 and protrude outside.

However, not only the cell terrace 130 and the electrode lead 150 may be disposed in the bus bar frame 330, but also a press plate 350 may be further inserted into the bus bar frame 330.

The press plate 350 may be a plate inserted and disposed in the bus bar frame 330. The press plate 350 may be a flat plate having a height corresponding to a height of the electrode lead 150 (in the z-axis direction), and the press plate 350 is not limited to this shape. Although not shown in this drawing, the press plate 350 may have a hollow shape having an open center and allow the electrode lead 150 to pass through.

The press plate 350 may be made of the insulating material like that of the bus bar frame 330. This configuration is to prevent the short circuit from occurring by being electrically connected to the electrode lead 150 which is a conductor.

The press plate 350 may be in contact with one surface and/or the other surface of the electrode lead 150. In detail, the press plate 350 may be inserted into the battery cell insertion part 331, and thus be disposed together in the area where the electrode lead 150 is disposed in the bus bar frame 330.

The area where the press plate 350 is disposed in the bus bar frame 330 is a press area PA. The press area PA is an area included in the battery cell insertion part 331, and may be an area where the electrode lead 150 and the press plate 350 are disposed in the bus bar frame 330. Here, a width of the press area PA may correspond to the sum of a width of the electrode lead 150 and a width of the press plate 350. In detail, the width of the press area PA may be the same as or greater than the sum of the width of the electrode lead 150 and the width of the press plate 350.

That is, the press plate 350 may be disposed in the bus bar frame 330 together with the electrode lead 150 to thus press the electrode lead 150, thereby reducing the assembly tolerance between the electrode lead 150 and the bus bar frame 330.

When disposed together in the bus bar frame 330, the press plate 350 and the electrode lead 150 may be fixed using a coupling member 360 coupled to a plate coupling part 333.

The plate coupling part 333 may be a hole disposed in the press area PA and passing through one surface of the bus bar frame 330 to be connected to the press area PA. In detail, the plate coupling part 333 may be the hole connected to the press area PA by passing through one surface of the bus bar frame 330 in a direction perpendicular to the battery cell insertion part 331 and the slit 332 on a plane.

The coupling member 360 may be inserted into the plate coupling part 333. The coupling member 360 inserted into the plate coupling part 333 may be, for example, a headless bolt, and is not limited thereto as long as the coupling member 360 fixes the press plate 350.

In summary, the coupling member 360 may press and fix the electrode lead 150 and the press plate 350 by being inserted and fixed to the plate coupling part 333. Accordingly, the electrode lead 150 and the press plate 350 may be fixed to each other more firmly, thus improving the coupling force and fixing force between the battery cell 110 and the bus bar frame 330.

In addition, the bus bar frame 330 of the present disclosure may include a guide hole 335. The guide hole 335 may be a hole disposed in each of two ends of the bus bar frame 330 in a height direction (or the z-axis direction). In detail, the guide hole 335 may be the hole passing through the bus bar frame 330 in the direction perpendicular to the battery cell insertion part 331 and the slit 332 on the plane (or an xy plane).

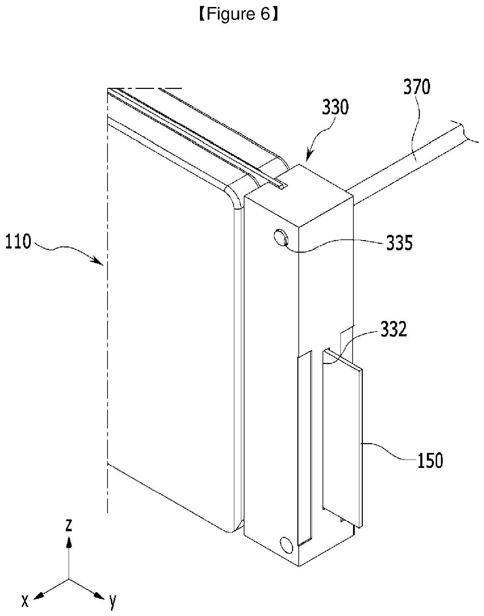

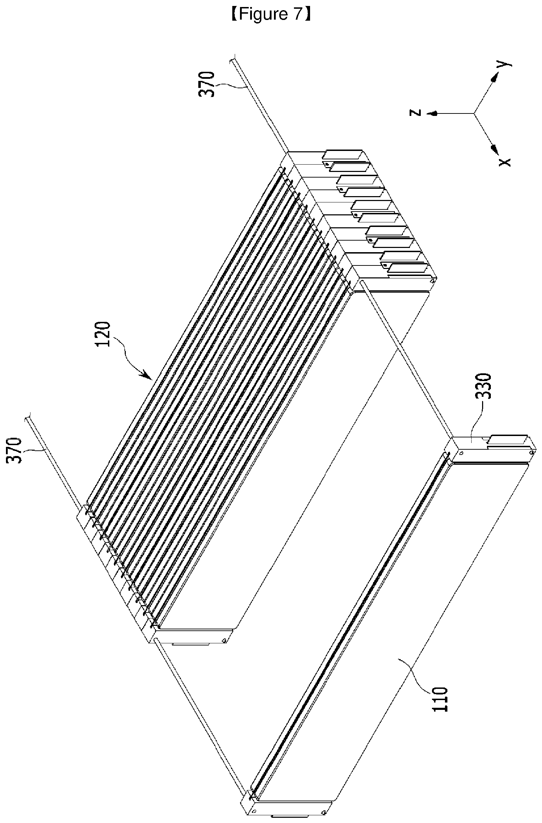

The guide hole 335 may be an area where a guide pin 370, which is described below with reference to FIGS. 6 and 7, is disposed. The guide pin 370 may be disposed to pass through the guide hole 335, thereby guiding a stack position between the battery cell stack 120 and the bus bar frame 330.

Referring to FIG. 5, one battery cell 110 may be mounted on and fixed to one bus bar frame 330, and the electrode lead 150 may protrude outside the bus bar frame 330. In this case, the electrode lead 150 protruding outside the bus bar frame 330 may be a reference for assembling the battery cell 110 and the bus bar frame 330 to each other.

In detail, one surface of the electrode lead 150 that protrudes outside the bus bar frame 330 may be an assembly reference surface 160. The assembly reference surface 160 may be a surface having a fixed width w1 and a fixed height h1, and may be a reference surface for setting the width w1 and height h1 of each electrode lead 150 of the plurality of battery cells 110. The width w1 of the assembly reference surface 160 may be its length in a direction in which the electrode lead 150 protrudes, and the height h1 of the assembly reference surface 160 may be a length of the electrode lead 150 perpendicular to the width w1. Here, the assembly reference surface 160 may differ based on a battery specification. Therefore, the width w1 and height h1 of the electrode lead 150 may be adjusted based on the battery specification.

That is, when the assembly reference surface 160 is set, the plurality of battery cell 110 and the corresponding bus bar frame 330 may be assembled to each other for the electrode lead 150 to protrude to outside the bus bar frame 330 by the set assembly reference surface 160.

In summary, a coupling reference between the battery cell 110 and the bus bar frame 330 may be set due to the set assembly reference surface 160, and the battery cell 110 and the bus bar frame 330 may thus be coupled to each other with a certain specification. Accordingly, the length of the electrode lead 150 protruding from the bus bar frame 330 may be easily controlled, thus maintaining an intended length of the electrode lead 150 to be constant during the welding. Therefore, a welding defect rate of the electrode lead 150 may be reduced even in the electrical connection between the bus bar 310 and the electrode lead 150.

FIG. 6 is a perspective view showing that the bus bar structure of the present disclosure is coupled to the guide pin. FIG. 7 is a perspective view showing that the battery cell and bus bar structure of FIG. 6 are stacked.

Referring to FIGS. 6 and 7, the battery cell 110 coupled to the bus bar frame 330 as shown in FIGS. 3 to 5 may be stacked to form the battery cell stack 120.

In this case, the guide pin 370 may be inserted into the guide hole 335 disposed in the bus bar frame 330. In detail, the guide pin 370 may be inserted into and pass through one guide hole 335, and the guide pin 370 passing through one guide hole 335 may be inserted into and pass through the other guide hole 335, thereby stacking the plurality of battery cells 110 and the bus bar frame 330. The guide hole 335 and the guide pin 370 may be position guide members guiding the stack position of the bus bar frames 330.

The guide pin 370 may be a pin extending in a stacking direction of the battery cell stack 120 (or the x-axis direction). As described above, the guide pin 370 may align the bus bar frames 330 by passing through the guide hole 335, which is the hole disposed in each of two ends of the bus bar frame 330 in the height direction (or the z-axis direction). That is, the guide pin 370 may align the plurality of the bus bar frames 330 by passing through the plurality of the guide holes 335 disposed in the plurality of the bus bar frames 330.

The guide pin 370 may be coupled to both the guide holes 335 respectively disposed in the two ends of the bus bar frame 330 in the height direction (or the z-axis direction), or may be disposed only in one end of the bus bar frame 330 in the height direction (or the z-axis direction) as shown in this drawing.

The guide pin 370 may be made of a material having high rigidity. The guide pin 370 may have higher rigidity than the bus bar frame 330, and for example, the guide pin 370 may be a metal bar.

The battery cell stack 120 may have a reduced assembly deviation when the battery cells 110 and the bus bar frames 330 respectively coupled thereto are stacked based on the guide pin 370. In detail, the battery cells 110 may be stacked in order at the same position as the guide pin 370 when the battery cells 110 are stacked based on the guide pin 370. It is thus possible to reduce the assembly deviation in left and right directions (or the x-axis direction and the -x-axis direction) of the battery cell stack 120. As a result, the outermost battery cells 110 of the battery cell stack 120 may all be disposed on the same line. It is thus possible to improve the space utilization in the battery module, the battery pack, or a battery device together with the battery energy density.

In addition, the bus bar frame 330 may be made of the insulating material and thus have relatively weak rigidity. However, the guide pin 370, which is made of the material having relatively greater rigidity than the bus bar frame 330, may be coupled to the bus bar frame 330, thereby improving the rigidity of the bus bar frame 330. It is thus also possible to improve the overall rigidity and durability of the battery, thereby improving the battery safety.

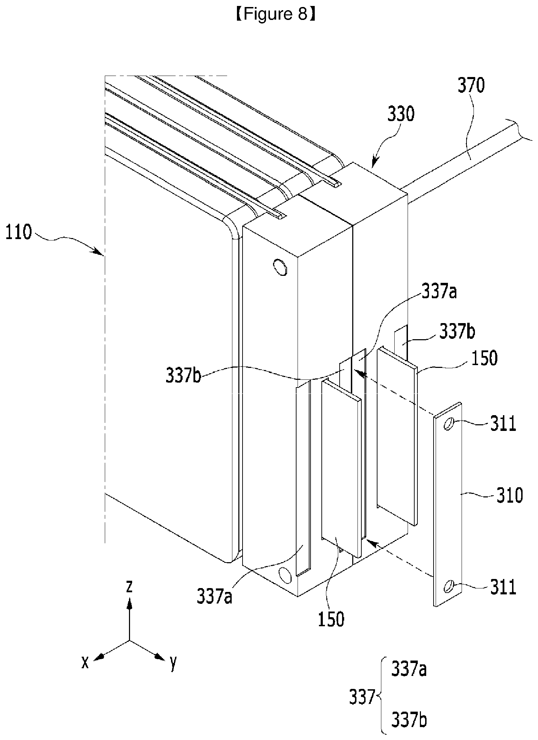

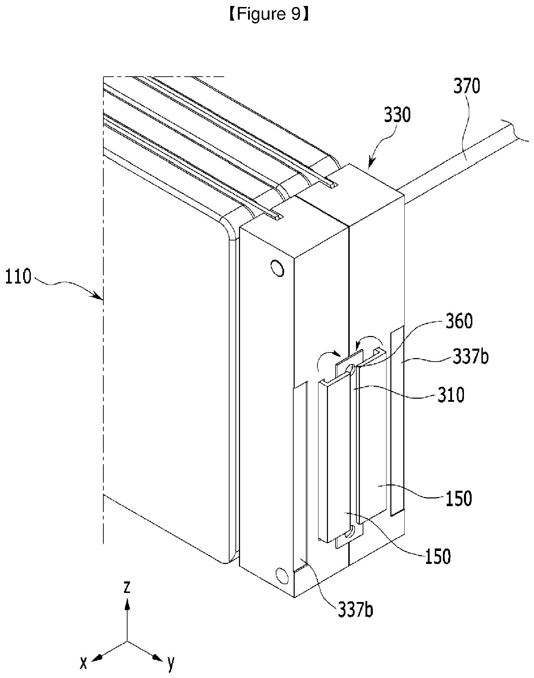

FIG. 8 is a view showing that the bus bar of the present disclosure is mounted on the bus bar frame. FIG. 9 is a view showing that the bus bar of FIG. 8 is mounted on the bus bar frame.

Referring to FIGS. 8 and 9, the bus bar 310 may be disposed between one bus bar frame 330 and the adjacent bus bar frame 330 stacked as shown in FIGS. 6 and 7.

The bus bar 310 may be a metal plate, and may be in contact with and electrically connected to the electrode lead 150. The bus bar 310 may be disposed between one electrode lead 150 and the adjacent electrode lead 150. In detail, the bus bar 310 may be mounted on the bus bar frame 330 disposed between the electrode leads 150 adjacent to each other.

The bus bar 310 may include a bus bar coupling part 311 which is a hole disposed in each of two ends of the bus bar 310 in the height direction (or the z-axis direction).

The bus bar coupling part 311 may be the hole passing through the bus bar 310. The bus bar 310 may be fixedly mounted on the bus bar frame 330 due to the coupling member 360 passing through the bus bar coupling part 311. The coupling member 360 may be, for example, a bolt or the like.

The bus bar 310 may be disposed in a bus bar mounting part 337.

The bus bar mounting part 337 may be a groove recessed into the bus bar frame 330, and may be an area where the bus bar 310 is mounted. The bus bar mounting part 337 may be the groove recessed into each of two surfaces of the bus bar frame 330. In more detail, the bus bar mounting part 337 may be the groove disposed between the slits 332 (see FIGS. 3 and 4).

The bus bar mounting part 337 may include a first bus bar mounting part 337a disposed in one surface of the bus bar frame 330, and a second the bus bar mounting part 337b disposed in the other surface of the bus bar frame 330.

The first bus bar mounting part 337a and the second the bus bar mounting part 337b may have their sizes corresponding to each other. In detail, the first bus bar mounting part 337a and the second the bus bar mounting part 337b may have the same size.

Each of the first bus bar mounting part 337a and the second the bus bar mounting part 337b may have a size corresponding to half a size of the bus bar 310. In detail, each of the first bus bar mounting part 337a and the second the bus bar mounting part 337b may have the same size as half the size of the bus bar 310 or a size larger than half the size of the bus bar 310.

Therefore, when one bus bar frame 330 and another adjacent bus bar frame 330 are stacked, the first bus bar mounting part 337a of one bus bar frame 330 and the second bus bar mounting part 337b of another adjacent bus bar frame 330 may form one bus bar mounting part 337. That is, one bus bar mounting part 337 may include the first bus bar mounting part 337a and second the bus bar mounting part 337b of the bus bar frames 330 adjacent to each other. In this case, one bus bar 310 may be mounted on one bus bar mounting part 337.

In summary, the bus bar 310 may be mounted in the groove of the bus bar mounting part 337, and the bus bar 310 may be fixedly coupled more firmly to the bus bar mounting part 337 due to the coupling member 360 inserted into and passing through the bus bar coupling part 311. In addition, although not shown in this drawing, the bus bar mounting part 337 may have an additional groove to which the coupling member 360 may be fixed, thereby improving its fixing force with the bus bar 310.

Referring to FIG. 9, the bus bar 310 may be mounted on the bus bar mounting part 337, and the electrode lead 150 may then be bent toward the bus bar 310 and come into contact with and electrically connected to the bus bar 310.

In detail, the bus bar 310 mounted on the bus bar mounting part 337 may be disposed between the electrode leads 150 of the respective adjacent bus bar frames 330. In this case, each electrode lead 150 may be bent toward the bus bar 310 and in contact with the bus bar 310. The electrode lead 150 in contact with the bus bar 310 may be fixed to the bus bar 310 by the welding or the like, and electrically connected thereto.

In this case, the plurality of electrode leads 150 may all have a constant length when the electrode lead 150 protruding outside the bus bar frame 330 serves as the reference surface. It is thus possible to reduce the welding defect rate between the electrode lead 150 and the bus bar 310, thereby improving the battery energy efficiency.

The bus bar structure described above and the battery module including the same may be applied to various devices. Such a device may be applied to transportation means such as an electric bicycle, an electric vehicle, and a hybrid vehicle. However, the present disclosure is not limited thereto, and may be applied to any of the various devices which may use the battery module and the battery pack including the same, which also falls within the scope of the present disclosure.

Although the embodiments of the present disclosure have been described in detail hereinabove, the scope of the present disclosure is not limited thereto. That is, various modifications and alterations made by those skilled in the art by using a basic concept of the present disclosure as defined in the following claims also fall within the scope of the present disclosure.

### <Description of symbols>

100: battery module
150: electrode lead
160: assembly reference surface
200: module frame
300: bus bar structure
310: bus bar
311: bus bar coupling part
330: bus bar frame
331: battery cell insertion part
332: slit
333: plate coupling part
335: guide hole
337: bus bar mounting part
350: press plate
360: coupling member
370: guide pin
400: end plate

## Claims

1. A battery module (100) comprising:
a battery cell stack (120) in which a plurality of battery cells (110) are stacked;
a module frame (200) storing the battery cell stack (120); and
a bus bar structure (300) including a plurality of bus bars (310) each electrically connected to the battery cells (110), and a bus bar frame (330) on which the bus bar (310) is disposed, the bus bar frame includes the plurality of separate bus bar frames (330), and the separate bus bar frames (330) are coupled to each other by a position guide member (335, 370),
the battery module (100) being **characterized in that**:
the battery module (100) further comprises a press plate (350) disposed in the bus bar frame (330),
the bus bar frame (330) includes:
a battery cell insertion part (331) in which an electrode lead (150) protruding from the front or rear surface of the battery cell (110) and a cell terrace (130), which is a pouch case surrounding a portion of the electrode lead (150), are inserted and mounted, and including a press area (PA) in which the press plate (350) is disposed,
a slit (332) connected to the battery cell insertion part (331) and allowing the electrode lead (150) to pass through the outside of the bus bar frame (330), and
a plate coupling part (333) included in the press area (PA) and passing through the bus bar frame (330) in a direction perpendicular to the battery cell insertion part (331) and the slit (332) on a plane.

2. The battery module (100) of claim 1, wherein
the position guide member (335, 370) includes
a guide hole (335) disposed in the separate bus bar frame, and
a guide pin (370) disposed to pass through the plurality of guide holes (335).

3. The battery module (100) of claim 2, wherein
the guide pin (370) is a pin extending in a stacking direction (X) of the battery cell stack (120).

4. The battery module (100) of claim 2, wherein
the guide hole (335) is a hole disposed in each of two ends of the bus bar frame (330) in a height direction (Z).

5. The battery module (100) of claim 2, wherein
the guide pin (370) has higher rigidity than the bus bar frame (330).

6. The battery module (100) of claim 1, wherein
one surface of the electrode lead (150) protruding outside the bus bar frame (330) is an assembly reference surface (160), and
a width and height of all the assembly reference surfaces (160) are constant in the plurality of battery cells (110).

7. The battery module (100) of claim 1, wherein
the press plate (350) is
in contact with one surface or the other surface of the electrode lead (150) disposed in the bus bar frame (330), or
in contact with the one surface and the other surface of the electrode lead (150) disposed in the bus bar frame (330).

8. The battery module (100) of claim 1, wherein
a coupling member (360) is inserted into the plate coupling part (333) to fix the bus bar (310) and the press plate (350) to each other.

9. The battery module (100) of claim 1, wherein
the bus bar (310) is disposed in a bus bar mounting part (337) which is a groove recessed into the bus bar frame (330),
the bus bar mounting part (337) is the groove recessed into each of two surfaces of the bus bar frame (330), and
the bus bar mounting part (337) includes a first bus bar mounting part (337a) disposed in one surface of the bus bar frame (330), and a second the bus bar mounting part (337b) disposed in the other surface of the bus bar frame (330).

10. The battery module (100) of claim 9, wherein
the first bus bar mounting part (337a) and the second the bus bar mounting part (337b) have their sizes corresponding to each other.

11. The battery module (100) of claim 10, wherein
each of the first bus bar mounting part (337a) and the second the bus bar mounting part (337b) has
the same size as half a size of the bus bar (310) or larger than half the size of the bus bar (310).

12. The battery module (100) of claim 9, wherein
the bus bar (310) includes a bus bar coupling part (311) which is a hole disposed in each of two ends of the bus bar (310) in a height direction (Z), and
a coupling member (360) is inserted into the bus bar coupling part (311) to fixedly couple the bus bar (310) to the bus bar mounting part (337).

## Patentansprüche

1. Batteriemodul (100), umfassend:
einen Batteriezellenstapel (120), in dem eine Vielzahl von Batteriezellen (110) gestapelt sind;
einen Modulrahmen (200), der den Batteriezellenstapel (120) aufnimmt; und
eine Sammelschienenstruktur (300), die eine Vielzahl von Sammelschienen (310), die jeweils elektrisch mit den Batteriezellen (110) verbunden sind, und einen Sammelschienenrahmen (330) enthält, auf dem die Sammelschiene (310) angeordnet ist, wobei der Sammelschienenrahmen die Vielzahl von separaten Sammelschienenrahmen (330) enthält und die separaten Sammelschienenrahmen (330) durch ein Positionsführungselement (335, 370) miteinander gekoppelt sind,
wobei das Batteriemodul (100) **dadurch gekennzeichnet ist, dass**:
das Batteriemodul (100) ferner eine Druckplatte (350) umfasst, die in dem Sammelschienenrahmen (330) angeordnet ist,
der Sammelschienenrahmen (330) enthält:
ein Batteriezelleneinsatzteil (331), in das ein Elektrodenableiter (150), der von der vorderen oder hinteren Oberfläche der Batteriezelle (110) vorsteht, und eine Zellenterrasse (130), die ein Pouch-Gehäuse ist, das einen Teil des Elektrodenableiters (150) umgibt, eingesetzt und montiert sind, und das einen Druckbereich (PA) enthält, in dem die Druckplatte (350) angeordnet ist,
einen Schlitz (332), der mit dem Batteriezelleneinsatzteil (331) verbunden ist und es dem Elektrodenableiter (150) ermöglicht, durch die Außenseite des Sammelschienenrahmens (330) zu verlaufen, und
einen Plattenkupplungsteil (333), der in dem Druckbereich (PA) enthalten ist und durch den Sammelschienenrahmen (330) in einer Richtung senkrecht zu dem Batteriezelleneinsatzteil (331) und dem Schlitz (332) auf einer Ebene verläuft.

2. Batteriemodul (100) nach Anspruch 1, wobei
das Positionsführungselement (335, 370)
ein Führungsloch (335), das in dem separaten Sammelschienenrahmen angeordnet ist, und
einen Führungsstift (370) enthält, der so angeordnet ist, dass er durch die Vielzahl von Führungslöchern (335) verläuft.

3. Batteriemodul (100) nach Anspruch 2, wobei
der Führungsstift (370) ein Stift ist, der sich in einer Stapelrichtung (X) des Batteriezellenstapels (120) erstreckt.

4. Batteriemodul (100) nach Anspruch 2, wobei
das Führungsloch (335) ein Loch ist, das an jedem von zwei Enden des Sammelschienenrahmens (330) in einer Höhenrichtung (Z) angeordnet ist.

5. Batteriemodul (100) nach Anspruch 2, wobei
der Führungsstift (370) eine höhere Steifigkeit als der Sammelschienenrahmen (330) aufweist.

6. Batteriemodul (100) nach Anspruch 1, wobei
eine Oberfläche des Elektrodenableiters (150), die außerhalb des Sammelschienenrahmens (330) vorsteht, eine Montagebezugsfläche (160) ist, und
eine Breite und Höhe aller Montagebezugsflächen (160) in der Vielzahl von Batteriezellen (110) konstant sind.

7. Batteriemodul (100) nach Anspruch 1, wobei
die Druckplatte (350)
in Kontakt mit einer Oberfläche oder der anderen Oberfläche des Elektrodenableiters (150) steht, der im Sammelschienenrahmen (330) angeordnet ist, oder
in Kontakt mit der einen Oberfläche und der anderen Oberfläche des Elektrodenableiters (150) steht, der im Sammelschienenrahmen (330) angeordnet ist.

8. Batteriemodul (100) nach Anspruch 1, wobei
ein Kupplungselement (360) in den Plattenkupplungsteil (333) eingesetzt ist, um die Sammelschiene (310) und die Druckplatte (350) aneinander zu befestigen.

9. Batteriemodul (100) nach Anspruch 1, wobei
die Sammelschiene (310) in einem Sammelschienen-Montageteil (337) angeordnet ist, der eine in den Sammelschienenrahmen (330) eingelassene Nut ist,
der Sammelschienen-Montageteil (337) die in jede von zwei Oberflächen des Sammelschienenrahmens (330) eingelassene Nut ist, und
der Sammelschienen-Montageteil (337) einen ersten Sammelschienen-Montageteil (337a), der in einer Oberfläche des Sammelschienenrahmens (330) angeordnet ist, und einen zweiten Sammelschienen-Montageteil (337b) umfasst, der in der anderen Oberfläche des Sammelschienenrahmens (330) angeordnet ist.

10. Batteriemodul (100) nach Anspruch 9, wobei
der erste Sammelschienen-Montageteil (337a) und der zweite Sammelschienen-Montageteil (337b) einander entsprechende Größen aufweisen.

11. Batteriemodul (100) nach Anspruch 10, wobei
jeder des ersten Sammelschienen-Montageteils (337a) und des zweiten Sammelschienen-Montageteils (337b)
die gleiche Größe wie die Hälfte einer Größe der Sammelschiene (310) aufweist oder größer ist als die Hälfte der Größe der Sammelschiene (310).

12. Batteriemodul (100) nach Anspruch 9, wobei
die Sammelschiene (310) einen Sammelschienen-Kupplungsteil (311) enthält, der ein Loch ist, das an jedem von zwei Enden der Sammelschiene (310) in einer Höhenrichtung (Z) angeordnet ist, und
ein Kupplungselement (360) in den Sammelschienen-Kupplungsteil (311) eingesetzt ist, um die Sammelschiene (310) fest mit dem Sammelschienen-Montageteil (337) zu koppeln.

## Revendications

1. Module de batterie (100) comprenant :
un empilement de cellules de batterie (120) dans lequel une pluralité de cellules de batterie (110) sont empilées ;
un châssis de module (200) contenant l'empilement de cellules de batterie (120) ; et
une structure de barre omnibus (300) comprenant une pluralité de barres omnibus (310) connectées électriquement chacune aux cellules de batterie (110), et un châssis de barre omnibus (330) sur lequel la barre omnibus (310) est disposée, le châssis de barre omnibus comprenant la pluralité de châssis de barre omnibus séparés (330), et les châssis de barre omnibus séparés (330) étant couplés les uns aux autres par un élément de guidage de position (335, 370),
le module de batterie (100) étant **caractérisé en ce que** :
le module de batterie (100) comprend en outre une plaque de pression (350) disposée dans le châssis de barre omnibus (330),
le châssis de barre omnibus (330) comprend :
une partie d'insertion de cellule de batterie (331) dans laquelle une sortie d'électrode (150) faisant saillie de la surface avant ou arrière de la cellule de batterie (110) et une terrasse de cellule (130), qui est un boîtier de type poche entourant une partie de la sortie d'électrode (150), sont insérées et montées, et comprenant une zone de pression (PA) dans laquelle la plaque de pression (350) est disposée,
une fente (332) reliée à la partie d'insertion de cellule de batterie (331) et permettant à la sortie d'électrode (150) de passer à l'extérieur du châssis de barre omnibus (330), et
une partie de couplage de plaque (333) incluse dans la zone de pression (PA) et traversant le châssis de barre omnibus (330) dans une direction perpendiculaire à la partie d'insertion de cellule de batterie (331) et à la fente (332) sur un plan.

2. Module de batterie (100) selon la revendication 1, dans lequel
l'élément de guidage de position (335, 370) comprend
un trou de guidage (335) disposé dans le châssis de barre omnibus séparé, et
une broche de guidage (370) disposée pour passer à travers la pluralité de trous de guidage (335).

3. Module de batterie (100) selon la revendication 2, dans lequel
la broche de guidage (370) est une broche s'étendant dans une direction d'empilement (X) de l'empilement de cellules de batterie (120).

4. Module de batterie (100) selon la revendication 2, dans lequel
le trou de guidage (335) est un trou disposé à chacune des deux extrémités du châssis de barre omnibus (330) dans le sens de la hauteur (Z).

5. Module de batterie (100) selon la revendication 2, dans lequel
la broche de guidage (370) a une rigidité supérieure à celle du châssis de barre omnibus (330).

6. Module de batterie (100) selon la revendication 1, dans lequel
une surface de la sortie d'électrode (150) faisant saillie à l'extérieur du châssis de barre omnibus (330) est une surface de référence d'assemblage (160), et
une largeur et une hauteur de toutes les surfaces de référence d'assemblage (160) sont constantes dans la pluralité de cellules de batterie (110).

7. Module de batterie (100) selon la revendication 1, dans lequel
la plaque de pression (350) est
en contact avec une surface ou l'autre surface de la sortie d'électrode (150) disposée dans le châssis de barre omnibus (330), ou
en contact avec ladite une surface et l'autre surface de la sortie d'électrode (150) disposée dans le châssis de barre omnibus (330).

8. Module de batterie (100) selon la revendication 1, dans lequel
un élément de couplage (360) est inséré dans la partie de couplage de plaque (333) pour fixer la barre omnibus (310) et la plaque de pression (350) l'une à l'autre.

9. Module de batterie (100) selon la revendication 1, dans lequel
la barre omnibus (310) est disposée dans une partie de montage de barre omnibus (337) qui est une rainure évidée dans le châssis de barre omnibus (330),
la partie de montage de barre omnibus (337) est la rainure évidée dans chacune des deux surfaces du châssis de barre omnibus (330), et
la partie de montage de barre omnibus (337) comprend une première partie de montage de barre omnibus (337a) disposée dans une surface du châssis de barre omnibus (330), et une seconde partie de montage de barre omnibus (337b) disposée dans l'autre surface du châssis de barre omnibus (330).

10. Module de batterie (100) selon la revendication 9, dans lequel
la première partie de montage de barre omnibus (337a) et la seconde partie de montage de barre omnibus (337b) ont des dimensions qui se correspondent.

11. Module de batterie (100) selon la revendication 10, dans lequel
chacune de la première partie de montage de barre omnibus (337a) et de la seconde partie de montage de barre omnibus (337b) a
la même dimension que la moitié d'une dimension de la barre omnibus (310) ou une dimension supérieure à la moitié de la dimension de la barre omnibus (310).

12. Module de batterie (100) selon la revendication 9, dans lequel
la barre omnibus (310) comprend une partie de couplage de barre omnibus (311) qui est un trou disposé à chacune des deux extrémités de la barre omnibus (310) dans le sens de la hauteur (Z), et
un élément de couplage (360) est inséré dans la partie de couplage de barre omnibus (311) pour coupler de manière fixe la barre omnibus (310) à la partie de montage de barre omnibus (337).
